(19) Europäisches Patentamt
European Patent Office
Office européen des brevets

(11) **EP 4 312 150 B1**

(12) **EUROPÄISCHE PATENTSCHRIFT**

(45) Veröffentlichungstag und Bekanntmachung des Hinweises auf die Patenterteilung:
**10.07.2024 Patentblatt 2024/28**

(21) Anmeldenummer: **22186760.9**

(22) Anmeldetag: **25.07.2022**

(51) Internationale Patentklassifikation (IPC):
**G06K 7/10** *(2006.01)* **G06K 7/14** *(2006.01)*

(52) Gemeinsame Patentklassifikation (CPC):
**G06K 7/1443**

(54) **LESEN EINES OPTISCHEN CODES**

READING OF AN OPTICAL CODE

LECTURE D'UN CODE OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**31.01.2024 Patentblatt 2024/05**

(73) Patentinhaber: **SICK AG**
**79183 Waldkirch (DE)**

(72) Erfinder:
• **Müller, Dr. Romain**
**79252 Stegen (DE)**
• **Schüler, Pascal**
**79331 Teningen (DE)**

(56) Entgegenhaltungen:
**US-A- 5 789 728 US-A1- 2012 138 686**

**Beschreibung**

Die Erfindung betrifft ein Verfahren zum Lesen eines optischen Codes und einen entsprechenden Codeleser.

Codeleser sind von Supermarktkassen, zur automatischen Paketidentifikation, Sortierung von Postsendungen, von der Gepäckabfertigung in Flughäfen und aus anderen Logistikanwendungen bekannt. In einem Codescanner wird ein Lesestrahl mittels eines Drehspiegels oder eines Polygonspiegelrads quer über den Code geführt. Ein kamerabasierter Codeleser nimmt mittels eines Bildsensors Bilder der Objekte mit den darauf befindlichen Codes auf, und eine Bildauswertungssoftware extrahiert aus diesen Bildern die Codeinformation.

In einer wichtigen Anwendungsgruppe werden die codetragenden Objekte an dem Codeleser vorbei gefördert. Ein scannender Codeleser erfasst dabei die jeweils nacheinander in seinen Lesebereich geführten Codes. Alternativ liest in einem kamerabasierten Codeleser eine Zeilenkamera die Objektbilder mit den Codeinformationen sukzessive und zeilenweise mit der Relativbewegung ein. Mit einem zweidimensionalen Bildsensor werden regelmäßig Bilddaten aufgenommen, die sich je nach Aufnahmefrequenz und Fördergeschwindigkeit mehr oder weniger überlappen. Damit die Objekte in beliebiger Orientierung auf dem Förderer angeordnet werden können, sind oft mehrere Codeleser an einem Lesetunnel vorgesehen, um Objekte von mehreren oder allen Seiten aufzunehmen. Auch ein scannender Codeleser erfasst die Remission und damit letztlich Bildzeilen, die zu einem Objektbild zusammengefügt werden können, auch wenn hierfür in der Praxis ein Bildsensor vorgezogen wird. In einem solchen Objektbild können Codebereiche identifiziert und ein- oder zweidimensionale Codes ausgelesen werden.

Dank der Fortentwicklung in der Kamera- und Bildsensortechnologie werden die zu verarbeitenden Bilder immer größer. Die ungeheuren Datenmengen stellen die begrenzten Rechenkapazitäten und Bandbreiten zur Weitergabe und Verarbeitung in einer Kamera unter Echtzeitbedingungen vor Herausforderungen. Dabei unterstützt der Einsatz heterogener Rechenarchitekturen, d.h. eines Verbundes eines Mikroprozessors (CPU, Central Processing Unit) mit beispielsweise einem FPGA (Field Programmable Gate Array), einem DSP (Digital Signal Processor), einer GPU (Graphics Processing Unit) oder auch einem sogenannten KI-Beschleuniger (NPU, Neural Processing Unit, TPU, Tensor Processing Unit).

Besonders bewährt hat sich hier die Kombination mit einem FPGA, das für das Auslesen der Bilddaten aus dem Bildsensor zuständig ist. Das FPGA ist zudem über eine Hochgeschwindigkeitsschnittstelle (PCI, Peripheral Component Interconnect, PCIE, PCI Express, MIPI, Mobile Industry Processor Interface) mit einem Speicher des Mikroprozessors verbunden. So werden die Bilddaten über DMA (Direct Memory Access) vom FPGA in den Speicher übertragen. Dieser Prozess des Auslesens und Speicherns wird als Streaming bezeichnet. Der mittels eines Mikroprozessors implementierte Decoder kann dann nachgelagert auf die gespeicherten Bilder zugreifen und die Codes auslesen. Der Streaming-Ansatz ist mit anderen oben genannten Zusatzbausteinen einer heterogenen Architektur nicht ohne Weiteres möglich, die in der Regel selbst eines gespeicherten Bildes bedürften, während das FPGA Bilddaten direkt pixelweise auslesen und weiterverarbeiten kann.

Während des Streamens können die Bilddaten von dem FPGA bereits vorverarbeitet werden, sozusagen on-the-fly, und dabei können mit den Bilddaten Zusatzinformationen oder Metadaten für den Mikroprozessor gespeichert werden. Typische Vorverarbeitungsschritte sind eine Binarisierung, die das ursprüngliche Farb- oder Grauwertbild in ein binäres Schwarz-Weiß-Bild überführt, und eine Segmentierung, mit der interessierende Bereiche (ROI, region of interest) mit Codekandidaten aufgefunden werden. Der Mikroprozessor kann dann seinen Decodierversuch gezielt auf die interessierenden Bereiche beschränken und dabei Vorverarbeitungsergebnisse des FPGA nutzen. Diese Dekodierung ist aber immer noch laufzeitintensiv, da der Mikroprozessor seine Schritte nur sequenziell ausführen kann und dazu immer wieder mit einem relativ zeitintensiven, gezielten Zugriff bestimmte Bilddaten entsprechend dem interessierenden Bereich aus dem Speicher lesen muss.

Die EP 2 003 599 A1 beschreibt einen optoelektronischen Sensor und ein Verfahren zur Erfassung von Codes, in dem ein Binarisierer für eine Umwandlung eines Farb- oder Grauwertbildes in ein Binärbild bereits während des Empfangs und/oder in Echtzeit ausgebildet ist, indem ein jeweils eingelesener Abschnitt binarisiert wird, noch während die weiteren Abschnitte eingelesen werden. Die EP 2 555 160 B1 findet in einer Vorverarbeitung auf einem FPGA interessierende Bereiche oder Codekandidaten anhand eines Kontrastmaßes, das in Teilbereichen oder Kacheln des eingelesenen Bildes bestimmt wird. In der EP 3 916 633 A1 werden erste Schichten eines neuronalen Netzes zur Segmentierung schon während des Einlesens auf einem FPGA durchlaufen. Dabei wird jeweils die Fähigkeit des FPGAs ausgenutzt, viele einfache Rechenoperationen wie beispielsweise Matrixmultiplikationen parallel in Echtzeit auszuführen. Sequentielle, komplexere Rechenoperationen wie diejenigen eines Decoders zum Lesen optischer Codes bleiben dem Mikroprozessor vorbehalten, der dafür auf die bereitgestellten Bilddaten und mögliche Vorverarbeitungsergebnisse zurückgreift. In allen diesen Beispielen einer Arbeitsteilung in einer heterogenen Architektur muss der Mikroprozessor anschließend noch auf die Bilddaten zugreifen, um zu decodieren, mit den geschilderten Nachteilen im Hinblick auf die Laufzeit.

Die US 2012/0138686 A1 offenbart einen Barcodescanner, der in einem Handgerät zunächst ein Analogsignal erfasst und daraus ein sogenanntes digitales Barcodemuster erzeugt. Das ist ein noch undecodiertes digitales Signal mit unterschiedlichen Pulsbreiten entsprechend der Striche und Lücken des Barcodes. Ein mit dem Laserscanner verbundener Host-Decoder decodiert dann das digitale Barcodemuster. Zudem können an das digitale Barcodemuster Metadaten angehängt werden.

Die US 5 789 728 A befasst sich mit einer Schnittstelle zwischen einem zweidimensionalen Barcodescanner und einem digitalen Host-Decoder, die unter anderem digitale Barcodemuster übermitteln kann.

Es ist daher Aufgabe der Erfindung, das Codelesen in einer heterogenen Architektur weiter zu verbessern.

Diese Aufgabe wird durch ein Verfahren zum Lesen eines optischen Codes und eine optoelektronische Codelesevorrichtung nach Anspruch 1 beziehungsweise 11 gelöst. Vorsorglich sei klargestellt, dass es sich um ein automatisch ablaufendes, insbesondere computerimplementiertes Verfahren handelt, das beispielsweise in einem Codeleser oder einer daran angeschlossenen Rechenvorrichtung abläuft, wie einem Steuerungsgerät, einem Computer, einem Edge Device, einem Netzwerk oder einer Cloud. Der zu lesende optische Code ist vorzugsweise ein Barcode In diesem Zusammenhang soll der Begriff Barcode als 1D-Strichcode verstanden werden, in der Literatur werden abweichend auch 2D-Codes bisweilen als Barcodes bezeichnet Es werden von einem zeilen- oder matrixförmigen Bildsensor Bilddaten mit dem Code aufgenommen. Wie einleitend erläutert, kann dies in einer Aufnahme oder sukzessive während einer Relativbewegung erfolgen, wobei auch die Helligkeitsprofile eines Codescanners als eine Bildzeile aufgefasst werden können.

Eine erste Verarbeitungseinheit liest die Bilddaten aus und führt damit eine Vorverarbeitung durch, in der vorverarbeitete Bilddaten und/oder Metadaten gewonnen werden. Metadaten sind Informationen über die Bilddaten beziehungsweise den Code, wie Position, Größe oder Typ des Codes. Eine Vorverarbeitung ist beispielsweise eine Binarisierung, eine Auflösungsanpassung, eine Bildaufbereitung oder eine Segmentierung. Nach der Vorverarbeitung durch die erste Verarbeitungseinheit liest eine zweite Verarbeitungseinheit den Code. Die zweite Verarbeitungseinheit hat also Zugriff auf wenigstens einen Teil der Ergebnisse der ersten Verarbeitungseinheit. Die beiden Verarbeitungseinheiten bilden vorteilhafterweise eine heterogene Architektur im einleitend erläuterten Sinn mit einer aufeinander aufbauenden Verarbeitung im Sinne einer Pipeline.

Die Erfindung geht von dem Grundgedanken aus, dass nur die erste Verarbeitungseinheit mit den eigentlichen Bilddaten arbeitet und die zweite Verarbeitungseinheit zum Lesen des Codes nicht mehr auf die Bilddaten zugreifen muss. Die zweite Verarbeitungseinheit liest den Code vielmehr allein aus den Metadaten. Die Bilddaten oder vorverarbeiteten Bilddaten werden vorzugsweise dennoch für andere Zwecke gespeichert, insbesondere für den Fall, dass das Codelesen allein auf Basis von Metadaten fehlschlägt. Denn obwohl das erfindungsgemäße Verfahren nur Metadaten für das eigentliche Decodieren verwendet, kann es in ein Verfahren eingebettet sein, bei dem nach einem gescheiterten Leseversuch mindestens ein weiterer herkömmlicher Decodierversuch anhand der Bilddaten folgt.

Alternativ zu einem Codelesen durch die zweite Verarbeitungseinheit wäre auch eine vollständige Umsetzung des Verfahrens nur auf der ersten Verarbeitungseinheit vorstellbar, um noch kürzere Decodierzeiten zu erzielen. Die erste Verarbeitungseinheit würde dann selbst abschließend den Code allein aus den Metadaten lesen. Das allerdings wäre eine Abkehr von einer heterogenen Architektur, die mit einem umfangreichen Entwicklungs- und Kostenaufwand verbunden wäre. Deshalb geht die Erfindung von zwei Verarbeitungseinheiten aus, und der abschließende Schritt des Codelesens allein aus den Metadaten wird erfindungsgemäß von der zweiten Verarbeitungseinheit durchgeführt.

Die Erfindung hat den Vorteil, dass der Dekodierprozess vor allem für Barcodes beschleunigt wird. Verarbeitungszeiten für Speicherzugriffe der zweiten Verarbeitungseinheit auf die Bilddaten entfallen. Die eingesparte Laufzeit kann in einer typischen Echtzeitanwendung für das Dekodieren anspruchsvollerer anderer Codes genutzt werden, um insgesamt die Leserate zu steigern. Alternativ, insbesondere sofern überhaupt nur Barcodes zu lesen sind, kann die Durchlaufgeschwindigkeit gesteigert werden. Die grundsätzliche heterogene Architektur kann erhalten bleiben, es ist nicht erforderlich, die gesamte Decoder-Engine unter erheblichem Entwicklungs- und Anpassungsaufwand in die erste Verarbeitungseinheit zu verlagern.

Die Metadaten weisen vorzugsweise Kantenpositionen von Schwarz-Weiß-Übergängen in den Bilddaten auf. Somit erkennt die erste Verarbeitungseinheit bei ihrer Vorverarbeitung Kanten und damit Kantenpositionen in den Bilddaten. Als Kante wird der Übergang zwischen einem dunklen und einem hellen Codeelement bezeichnet, insbesondere zwischen einem Balken und einer Lücke eines Barcodes. Dabei sind Balken und Lücken nur in einem binarisierten Bild tatsächlich schwarz und weiß, ansonsten wird hier vereinfachend kein Unterschied zwischen weiß und hellen Grautönen beziehungsweise schwarz und dunklen Grautönen gemacht. Der Begriff Schwarz-Weiß-Übergang soll die umgekehrte Richtung eines Weiß-Schwarz-Übergangs einschließen. Vorzugsweise ist aus den Metadaten für jede Kantenposition auch diese Richtung bekannt, beispielsweise durch ein Richtungsbit oder Flag je Kante oder nur für eine Kante, aus der dann wegen der alternierenden Abfolge von schwarz und weiß die Richtung für alle übrigen Kanten eindeutig ableitbar ist.

Die Metadaten weisen bevorzugt zumindest anfänglich Kantenpositionen für eine horizontale und eine vertikale Richtung auf. Es werden demnach von der ersten Verarbeitungseinheit zunächst Schwarz-Weiß-Übergänge sowohl in X-Richtung als auch in Y-Richtung gefunden und entsprechende Kantenpositionen erzeugt. Allerdings wird in einem zweiten Schritt möglicherweise selektiert, und es werden dann nur Kantenpositionen für eine der beiden Richtungen behalten und mit den Metadaten an die zweite Verarbeitungseinheit weitergegeben.

Vorzugsweise werden Kantenpositionen in horizontaler Richtung und vertikaler Richtung gezählt, und es wird eine Vorzugsrichtung des Codes anhand der Kantenpositionen mit der höheren Anzahl bestimmt. Dies greift die soeben erläuterte Möglichkeit auf, in einem zweiten Schritt zu selektieren. Ein Barcode wird im Idealfall quer zu seinen Strichen gelesen und kann spiegelbildlich längs zu seinen Strichen nicht gelesen werden. In einer allgemeinen Codeleseanwendung liegt nicht fest, wie die Zeilen- und die Spaltenrichtung der Bilddaten bezüglich des Barcodes orientiert sind. Dem Idealfall näher kommt die Vorzugsrichtung, in der mehr Schwarz-Weiß-Übergänge vorliegen, so dass durch ein Zählen der Kantenpositionen die Vorzugsrichtung gefunden wird. Vorteilhafterweise werden nur Kantenpositionen in der Vorzugsrichtung weiterverarbeitet und als Metadaten weitergegeben, Kantenpositionen in der anderen Richtung können verworfen werden. Die Vorzugsrichtung wird bevorzugt schon in der ersten Verarbeitungseinheit bestimmt, dies kann aber auch erst später in der Verarbeitungskette in der zweiten Verarbeitungseinheit erfolgen.

Die Kantenpositionen werden vorzugsweise vielfach, nämlich einmal je Zeile und/oder Spalte der Bilddaten bestimmt. Theoretisch genügt eine einzige Linie passender Orientierung durch einen Barcode, um dessen Inhalt zu lesen. Das setzt aber eine fast ideale, in der Praxis nicht unbedingt gegebene Bildaufnahme längs der Linie voraus. Das Bild eines Barcodes enthält mit den Zeilen und Spalten der Bilddaten eine Vielzahl von Linien in X-Richtung und Y-Richtung, und diese Redundanz kann genutzt werden, um die Leserate zu verbessern. Die Kantenpositionen werden entsprechend von der ersten Verarbeitungseinheit für mehrere oder alle Zeilen und/oder Spalten der Bilddaten bestimmt. Somit entsteht insbesondere ein zweidimensionales Feld aus Kantenpositionen, mit einer Dimension für die Nummer der Zeile beziehungsweise Spalte und der anderen Dimension für die Kantenpositionen innerhalb der Zeile beziehungsweise Spalte. Um die X-Richtung und Y-Richtung zu unterscheiden, können zwei solche zweidimensionalen Felder angelegt werden.

Aus den vielfachen Kantenpositionen zu mehreren Zeilen und/oder Spalten werden bevorzugt jeweils repräsentative Kantenpositionen für die horizontale und/oder vertikale Richtung bestimmt. Am Ende soll der Barcode nicht mehrfach aus vielen redundanten Zeilen beziehungsweise Spalten gelesen werden, sondern nur einmal. Die redundant bestimmten Kantenpositionen werden dafür in dieser Ausführungsform zu jeweils nur einer repräsentativen Kantenposition komprimiert. In der Repräsentation des Vorabsatzes als zweidimensionales Feld wird gleichsam eine Dimensionsreduktion durchgeführt und die zweite Dimension eliminiert, indem zueinander korrespondierende Kantenpositionen in einer jeweiligen repräsentativen Kantenposition zusammengefasst werden. Diese Zusammenfassung oder Dimensionsreduktion erfolgt vorzugsweise in der zweiten Verarbeitungseinheit, wobei vorbereitende Schritte bereits in der ersten Verarbeitungseinheit implementiert sein können.

Vorzugsweise werden zum Auffinden repräsentativer Kantenpositionen die Zeilen und/oder Spalten gegeneinander verschoben, um die jeweiligen Kantenpositionen zueinander auszurichten. Wenn der optische Code nicht zufällig genau in Zeilen- oder Spaltenrichtung ausgerichtet ist, sondern schräg aufgenommen wurde, haben die Zeilen beziehungsweise Spalten einen gegenseitigen Versatz. Dieser Versatz kumuliert sich über die Zeilen beziehungsweise Spalten. Bei perfektem Ausgleich des Versatzes ist eine Situation erreicht, die einer Aufnahme mit Ausrichtung in X- beziehungsweise Y-Richtung entspricht. Das wird in der Praxis nicht erreicht, ist aber die Zielvorstellung. Die Verschiebung erfolgt vorzugsweise in der zweiten Verarbeitungseinheit.

Die jeweils erforderliche Verschiebung wird bevorzugt durch Vergleich einer jeweiligen Zeile mit zwei benachbarten Zeilen und/oder einer jeweiligen Spalte mit zwei benachbarten Spalten bestimmt. Es wird also beispielsweise die i-te Zeile mit der i-1-ten Zeile und der i-2-ten Zeile verglichen. Dabei wird ein Fehlermaß bestimmt, das die Unterschiede zwischen den Abständen der Kantenpositionen über die Vergleichszeilen hinweg kumuliert. Aus dem Fehlermaß lässt sich ableiten, um wieviel verschoben werden sollte, um das Fehlermaß zu minimieren. Der Fehler beträgt in der Vorzugsrichtung zwischen zwei benachbarten Zeilen höchstens einen Pixel, da die Schräglage bei 45° begrenzt ist, andernfalls wäre es nicht die Vorzugsrichtung. Die Erläuterung zu Zeilen überträgt sich analog auf Spalten, falls das die Vorzugsrichtung ist. Die Bestimmung der erforderlichen Verschiebung kann als Vorbereitungsschritt bereits in der ersten Verarbeitungseinheit implementiert sein, alternativ in der zweiten Verarbeitungseinheit. Die eigentliche Verschiebung erfolgt wie erwähnt auch bei einer vorbereitenden Bestimmung von Verschiebungen durch die erste Verarbeitungseinheit vorzugsweise in der zweiten Verarbeitungseinheit.

Die repräsentativen Kantenpositionen werden vorzugsweise durch Bilden und Auswerten eines Positionshistogramms bestimmt oder korrigiert. In dem Positionshistogramm werden über die Zeilen beziehungsweise Spalten hinweg die Kantenpositionen gesammelt. Idealerweise sollten, insbesondere nach vorheriger Ausrichtung wie in den beiden letzten Absätzen erläutert, nur schmale Peaks der Breite Eins an über die Zeilen beziehungsweise Spalten hinweg übereinstimmenden Kantenpositionen entstehen. Aus den Abweichungen lässt sich eine noch erforderliche Korrektur bestimmen. Das Positionshistogramm, vorzugsweise mit vorausgehender Ausrichtung der Zeilen beziehungsweise Spalten ist genauer als eine an sich alternativ denkbare einfache Mittelwertbildung über die Zeilen beziehungsweise Spalten hinweg. Das Positionshistogramm wird vorzugsweise in der zweiten Verarbeitungseinheit gebildet und ausgewertet.

Die erste Verarbeitungseinheit liest bevorzugt die Bilddaten in einem Bilddatenstrom ein. Das Einlesen und Weitergeben von Bilddaten als Bilddatenstrom vorzugsweise in Gruppen benachbarter Pixel wird als Streaming bezeichnet. Insbesondere liest die erste Verarbeitungseinheit jeweils eine Bildzeile oder einen Teil davon aus dem Bildsensor aus, das Bild wird demnach zeilenweise von dem Bildsensor eingelesen beziehungsweise gestreamt, und die Verarbeitung erfolgt zeilenorientiert. Für Vorverarbeitungen, die mehr als eine Bildzeile betreffen, kann die erste Verarbeitungseinheit einen Bildpuffer aufweisen, in dem rollierend eine entsprechende Anzahl Bildzeilen zwischengespeichert wird. Prinzipiell kann in gleicher Weise statt zeilenweise auch spaltenweise gestreamt werden. Das wird hier lediglich als Unterschied in der Definition der Koordinaten aufgefasst und nicht unterschieden. Erfindungsgemäß müssen die Bilddaten selbst beziehungsweise vorverarbeitete Bilddaten nicht weitergegeben oder gespeichert werden, da allein auf Basis der Metadaten decodiert wird. Das Streaming bezieht sich dann nur auf die Vorverarbeitung und Gewinnung von Metadaten durch die erste Verarbeitungseinheit. Vorzugsweise werden die Bilddaten zusätzlich für andere Zwecke in einen Speicher gestreamt.

Vorzugsweise werden eingelesene Bilddaten schon verarbeitet, noch während die erste Verarbeitungseinheit weitere Bilddaten einliest. Die erste Verarbeitungseinheit ist somit für eine Vorverarbeitung "on-the-fly" beziehungsweise schon während des Streamens ausgebildet. Diese Vorverarbeitung erfolgt gleichsam direkt an der Quelle und noch bevor irgendeine andere Instanz überhaupt die Möglichkeit für einen Zugriff auf die Bilddaten erhalten hat.

Die erste Verarbeitungseinheit unterteilt die Bilddaten vorzugsweise in Kacheln, also Teilbereiche einer vorgegebenen Größe, wobei die Verarbeitung der Bilddaten kachelweise erfolgt und wobei in den Metadaten Kantenpositionen von Schwarz-Weiß-Übergängen in den Bilddaten über Kacheln hinweg zusammengefügt werden. Diese Unterteilung ist eine a-priori-Unterteilung in Kacheln einer vorgegebenen Position und Geometrie, unabhängig vom Bildinhalt, insbesondere in einem festen Raster gleich großer Rechtecke mit n x m oder noch bevorzugter n x n Pixeln. Das Bild wird beispielsweise in mindestens fünf, mindestens zehn oder noch mehr Kacheln je Zeile beziehungsweise Spalte aufgeteilt. Dadurch müssen nur jeweils kleine Datenpakete verarbeitet werden.

Die Kantenpositionen werden zum Decodieren über die Grenzen von Kacheln hinweg benötigt und daher entsprechend zusammengefügt, wobei entsprechende Vielfache der Breite beziehungsweise Höhe einer Kachel, je nach Position der Kachel innerhalb einer Kette von Kacheln, zu einer Kantenposition hinzuaddiert werden.

Die erste Verarbeitungseinheit klassifiziert bevorzugt die Kacheln, ob darin ein Teil eines Codes aufgenommen ist, und ordnet Kacheln einem interessierenden Bereich (ROI, Region of Interest) mit einem Code zu. Das Kriterium, ob eine Kachel ein Codefragment enthält, ist beispielsweise ein ausreichender Kontrast. Mit Hilfe interessierender Bereiche können die zu bearbeitenden Bildflächen deutlich verringert werden, da optische Codes üblicherweise nur einen kleinen Anteil des aufgenommenen Bildes ausmachen. Die übrigen Kacheln können jedenfalls in Bezug auf Codelesen verworfen werden. Es kann mehrere Codes oder Codekandidaten und damit mehrere interessierende Bereiche geben, die dann vorzugsweise einzeln abgearbeitet werden, wobei eine Parallelisierung möglich ist. Die Kacheln, die gemäß der Klassifikation ein Codefragment enthalten, werden jeweils einem interessierenden Bereich mit einem Codekandidaten zugeordnet.

Die erste Verarbeitungseinheit weist bevorzugt ein FPGA (Field Programmable Gate Array) auf. Ein FPGA ist besonders geeignet zum Streamen von Bilddaten sowie für eine Echtzeitverarbeitung großer Datenmengen mit vielen, vergleichsweise einfachen einzelnen Rechenoperationen. Die zweite Verarbeitungseinheit weist bevorzugt einen Mikroprozessor auf. Ein Mikroprozessor ist viel flexibler und von sich aus zu komplexeren Rechenschritten in der Lage, und das ist für eine nachgelagerte Metadatenverarbeitung von Vorteil. Das FPGA und der Mikroprozessor bilden gemeinsam eine besonders vorteilhafte heterogene Architektur, denkbare Alternativen sind in der Einleitung beschrieben.

Die Codes sind bevorzugt auf Objekten angebracht, die auf einer Fördereinrichtung durch einen Erfassungsbereich des Bildsensors gefördert werden. Das ist eine typische Codeleseanwendung in stationärer Montage des Codelesers, oder jedenfalls des bilderfassenden Teils davon, an einer Fördereinrichtung oder einem Förderband. Durch die Förderbewegung ist das Zeitfenster zum Lesen der Codes auf den Objekten begrenzt, die sich in Relativbewegung zum Codeleser befinden. Unter solchen Echtzeitbedingungen ist ein besonders schnelles Decodieren ein großer Vorteil. Das gilt selbst dann noch, wenn mit dem erfindungsgemäßen Verfahren nur ein gewisser Teil einfach erfassbarer Barcodes erledigt werden kann, da dann mehr Decodierzeit für kompliziertere Codetypen, ungünstigere Aufnahmeperspektiven, schlechtere Bildqualität, geringere Auflösung oder Modulgrößen und dergleichen zur Verfügung steht.

In bevorzugter Weiterbildung ist eine optoelektronische Codelesevorrichtung mit einem Bildsensor zur Erzeugung von Bilddaten und mit einer Steuer- und Auswertungseinheit vorgesehen, die eine erste Verarbeitungseinheit und eine zweite Verarbeitungseinheit aufweist und in der ein erfindungsgemäßes Verfahren zum Lesen eines optischen Codes implementiert ist. Der Bildsensor ist je nach Ausführungsform ein Zeilen- oder Matrixsensor eines kamerabasierten Codelesers. Auch ein Barcodescanner ist vorstellbar, dessen Lichtempfangselement im Verlauf eines Scans ein jeweiliges Intensitätsprofil aufnimmt, das wie eine Bildzeile behandelt werden kann. Die Steuer- und Auswertungseinheit ist vorzugsweise Teil der Codelesevorrichtung selbst und insbesondere in deren Gehäuse untergebracht. Denkbar ist aber auch eine mindestens teilweise externe Steuer- und Auswertungseinheit.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1 eine schematische Übersichtsdarstellung der beispielhaften Montage einer Codelesevorrichtung über einem Förderband;

Fig. 2 eine schematische Darstellung einer heterogenen Architektur zur Bildauswertung und zum Codelesen mit einem FPGA zum Streamen und Vorverarbeiten und einer CPU zum Decodieren;

Fig. 3 ein Beispielbild mit optischen Codes, einer Unterteilung in Kacheln und einem interessierenden Bereich mit einem optischen Code;

Fig. 4a eine Darstellung einer beispielhaften Kachel mit einem Codefragment;

Fig. 4b eine Darstellung der binarisierten Kachel gemäß Figur 4a;

Fig. 5 ein beispielhaftes Ablaufdiagramm zum Erzeugen von Metadaten mit Kantenpositionen durch ein FPGA und anschließendem Lesen eines optischen Codes allein auf Basis der Metadaten durch einen Mikroprozessor;

Fig. 6 eine tabellarische Darstellung beispielhafter Kantenpositionen über mehrere Kacheln bei Auswertung eines in X- beziehungsweise Y-Richtung ausgerichteten Barcodes;

Fig. 7 eine tabellarische Darstellung ähnlich Figur 6, nun jedoch bei einem weder in X-Richtung noch Y-Richtung ausgerichteten Barcode;

Fig. 8 eine matrixartige Darstellung eines Verschiebefehlers zwischen Zeilen der Aufnahme eines Barcodes;

Fig. 9 eine weitere tabellarische Darstellung beispielhafter Kantenpositionen eines aufgenommenen Barcodes über mehrere Kacheln hinweg;

Fig. 10 eine tabellarische Darstellung gemäß Figur 9 nach Korrektur von Verschiebungen zwischen den Zeilen;

Fig. 11 ein beispielhaftes Positionshistogramm zur Erläuterung einer verbesserten Korrektur von Verschiebungen zwischen den Zeilen; und

Fig. 12 eine Illustration der anhand des Positionshistogramms erfassbaren Verschiebungen.

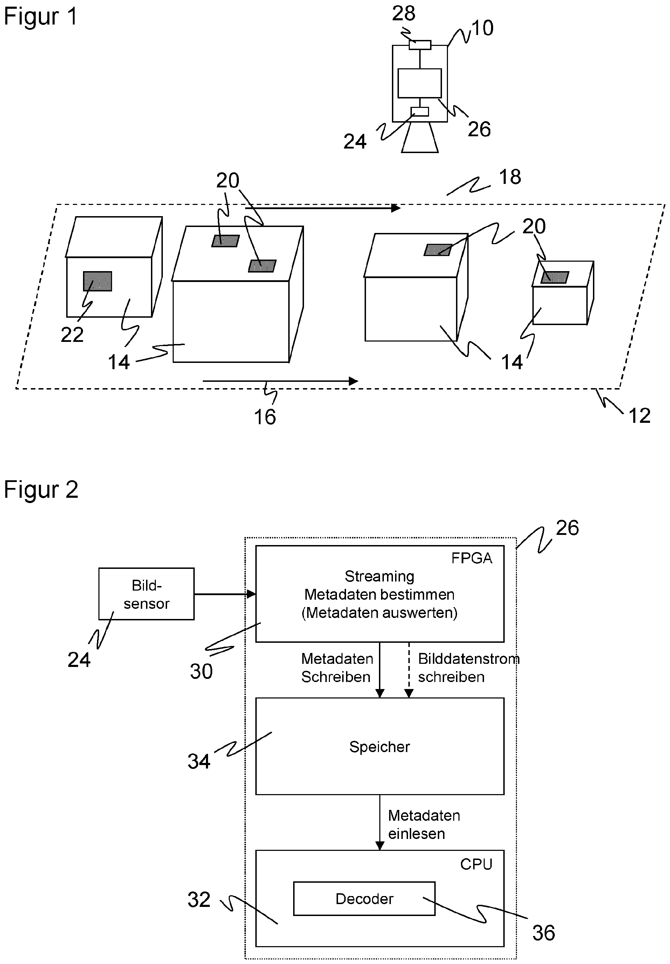

Figur 1 zeigt einen Codeleser 10, der über einem Förderband 12 montiert ist, welches Objekte 14, wie durch den Pfeil 16 angedeutet, durch den Erfassungsbereich 18 des Codelesers 10 fördert. Die Objekte 14 tragen an ihren Außenflächen Codes 20, die von dem Codeleser 10 erfasst und ausgewertet werden. Die Codes 20 können von dem Codeleser 10 nur dann erkannt werden, wenn sie auf der Oberseite oder zumindest von oben sichtbar angebracht sind. Daher kann abweichend von der Darstellung in Figur 1 zum Lesen eines etwa seitlich oder unten angebrachten Codes 22 eine Mehrzahl von Codelesern 10 aus verschiedenen Richtungen montiert sein, um eine sogenannte Omnilesung aus allen Richtungen zu ermöglichen. Diese stationäre Anwendung eines Codelesers an einem Förderband 12 ist in der Praxis sehr häufig. Die Erfindung bezieht sich aber vor allem das Lesen von Codes 20 beziehungsweise den Codeleser 10 selbst, so dass dieses Beispiel nicht einschränkend verstanden werden darf.

Der Codeleser 10 erfasst mit einem Bildsensor 24 Bilddaten der geförderten Objekte 14 und der Codes 20, die von einer Steuer- und Auswertungseinheit 26 mittels Bildauswertung und einem Decodierverfahren weiterverarbeitet werden. Die Steuer- und Auswertungseinheit 26 wird sogleich unter Bezugnahme auf die Figur 2 näher beschrieben. Über eine Schnittstelle 28 gibt der Codeleser 10 Informationen aus, wie gelesene Codes oder Bilddaten möglicherweise in verschiedenen Verarbeitungsstufen.

Figur 2 zeigt die Steuer- und Auswertungseinheit 26 und ihre Anbindung in einer schematischen Darstellung. Die Steuer- und Auswertungseinheit 26 in dieser bevorzugten Ausführungsform umfasst eine erste Verarbeitungseinheit 30, die im Folgenden am Beispiel eines FPGA (Field Programmable Gate Array) sowie eine zweite Verarbeitungseinheit 32, die im Folgenden am Beispiel eines Mikroprozessors oder einer CPU (Central Processing Unit) erläutert wird.

Die erste Verarbeitungseinheit 30 ist einerseits mit dem Bildsensor 24 verbunden und weist andererseits eine Schnittstelle in Richtung der zweiten Verarbeitungseinheit 32 auf, vorzugsweise eine Hochgeschwindigkeitsschnittstelle (PCI, PCIE, MIPI). Beide Verarbeitungseinheiten 30, 32 können auf einen Speicher 34 für Bilddaten und Zusatzinformationen, Metadaten oder Verarbeitungsergebnisse zugreifen. Die entsprechenden Lese- und Schreibvorgänge erfolgen vorzugsweise mittels DMA (Direct Memory Access). Der Speicher 34 lässt sich vorzugsweise mindestens funktional, je nach Ausführungsform auch strukturell als Teil der zweiten Verarbeitungseinheit 32 auffassen.

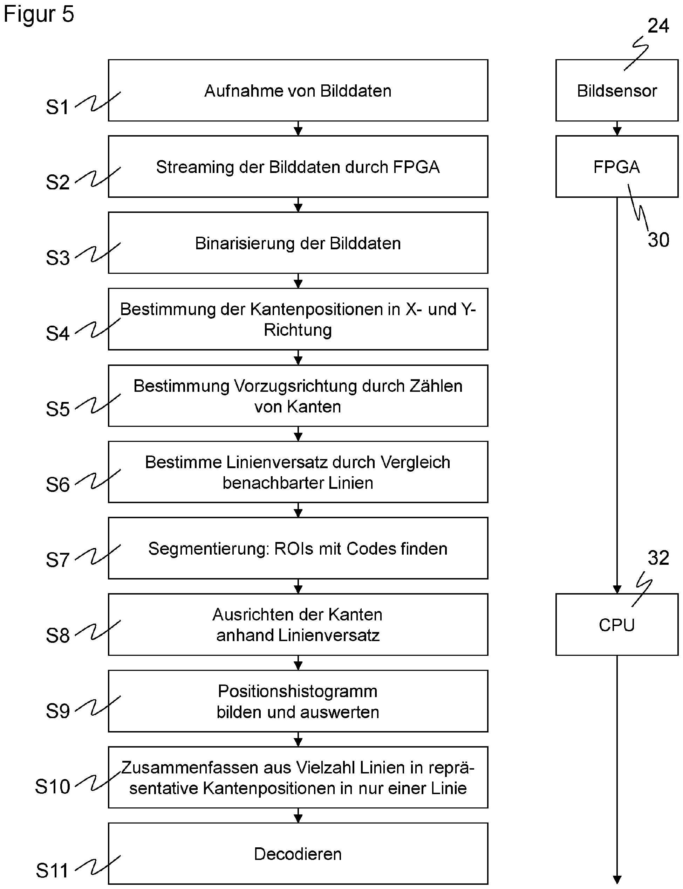

Im Betrieb nimmt nun der Bildsensor 24 jeweils ein neues Bild oder einen neuen Bildabschnitt auf. Das kann ein rechteckiges Bild eines Matrixsensors sein, es sind aber auch einzelne oder mehrere Bildzeilen eines Zeilensensors vorstellbar, die dann sukzessive im Verlauf der Relativbewegung zwischen Codeleser 10 und Objekt 14 ein Gesamtbild ergeben. Die Bilddaten des Bildsensors 24 werden von der ersten Verarbeitungseinheit 30 ausgelesen. Dabei werden durch Vorverarbeitungen der Bilddaten Metadaten bestimmt, und zwar vorteilhafterweise "on-the-fly", d.h. noch während weitere Bilddaten des Bildes von dem Bildsensor 24 einzulesen sind beziehungsweise eingelesen werden. Die Vorverarbeitungen und die damit gewonnenen Metadaten werden später unter Bezugnahme auf die Figur 5 näher erläutert. Die Metadaten werden, wie durch einen Pfeil dargestellt, in den Speicher 34 geschrieben. Die Bilddaten selbst werden für das erfindungsgemäße Codelesen von der zweiten Verarbeitungseinheit 32 nicht benötigt, werden aber vorzugsweise ebenfalls direkt und/oder vorverarbeitet in den Speicher 34 übertragen oder gestreamt, wie durch einen gestrichelten Pfeil gezeigt.

Die zweite Verarbeitungseinheit 32 greift auf die Metadaten in dem Speicher 34 zu, um sie weiter zu verarbeiten und mit einem Decoder 36 der zweiten Verarbeitungseinheit 32 den Inhalt der aufgenommenen optischen Codes 20 allein aus den Metadaten auszulesen. Der Decoder 36 arbeitet für das erfindungsgemäße Verfahren zum Lesen von Codes nur mit Metadaten und benötigt keinen Zugriff auf Bilddaten. Das schließt den möglichen Zugriff auf Bilddaten nicht aus, insbesondere um in mindestens einem weiteren Leseversuch (Retry) Codes zu lesen, die sich allein aus Metadaten nicht lesen ließen. Da solche Verwendungen der Bilddaten kein Teil des erfindungsgemäßen Lesens von Codes, sondern mögliche Ergänzungen sind, ist nur ein Pfeil für das Einlesen der Metadaten und kein Pfeil für ein Einlesen von Bilddaten gezeigt.

Die Darstellung der Figur 2 ist beispielhaft zu verstehen, für die Erfindung werden allgemein lediglich zwei Verarbeitungseinheiten 30, 32 benötigt, wobei die erste Verarbeitungseinheit 30 Bilddaten einliest und durch deren Vorverarbeitung Metadaten erzeugt. Die Metadaten werden auf beliebigem Wege an die zweite Verarbeitungseinheit 32 weitergegeben, die allein aus den Metadaten Codes liest.

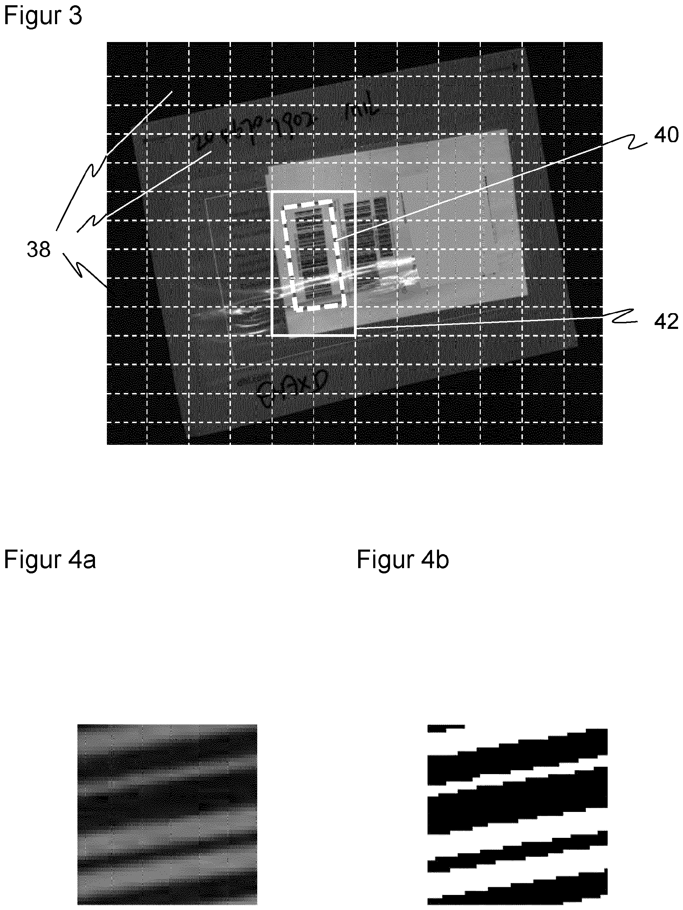

Figur 3 zeigt ein Beispielbild mit optischen Codes, wie es von dem Codeleser 10 aufgenommen wird. Das Bild wird vorzugsweise in Kacheln 38 unterteilt, bevorzugt wie dargestellt in einem gleichmäßigen Raster von n x m Pixeln, wobei n und m so vorgegeben sind, dass eine Vielzahl von Kacheln je Zeile und Spalte entsteht. Zu den Kacheln 38 werden Metadaten bestimmt. Aus diesen Metadaten lässt sich einerseits beurteilen, ob die jeweilige Kachel 38 eine interessante Struktur wie einen optischen Code enthält, etwa anhand eines Kontrastmaßes und insbesondere einer Varianz der Grauwertverteilung. Vor allem dienen die Metadaten, wie noch unter Bezugnahme auf die Figur 5 zu erläutern, dem Lesen von Codes. Es wurde bereits erwähnt, dass die Verarbeitungsschritte zum Gewinnen der Metadaten on-the-fly während des Streamens möglich sind.

Es ist nicht erforderlich, sämtliche Kacheln 38 auszuwerten. Das Bild der Figur 3 enthält zwei optische Codes, wobei exemplarisch einer der beiden Codes als interessierender Bereich 40 markiert ist. Das übrige Bild ist für das Codelesen uninteressant. Deshalb wird vorzugsweise nur eine Auswahl 42 von Kacheln 38 weiterverarbeitet, die dem interessierenden Bereich 40 entspricht. Gibt es mehrere interessierende Bereiche, so wird die Auswahl 42 entsprechend vervielfacht. Es hängt von dem Bild ab, ob es einen oder mehrere interessierende Bereiche 40 oder womöglich gar keinen interessierenden Bereich 40 gibt, etwa weil das Bild keine optischen Codes enthält. Die kachelweise Verarbeitung der Bilddaten ist besonders vorteilhaft, aber nicht unbedingt erforderlich. Auch ohne Kacheln muss nicht zwangsläufig das gesamte Bild ausgewertet werden, es sind andere Segmentierungen bekannt, um interessierende Bereiche aufzufinden.

Figur 4a zeigt zur Illustration eine beispielhafte Kachel 38 aus der Auswahl 42 mit einem Codefragment. Eine Kachel kann zum Beispiel 24x24 oder 48x48 Pixel aufweisen. Figur 4b zeigt die Kachel nach einer Binarisierung, der Wandlung in ein reines Schwarz-Weiß-Bild, einem vorteilhaften Vorverarbeitungsschritt der ersten Verarbeitungseinheit 30.

Figur 5 zeigt ein beispielhaftes Ablaufdiagramm zum Erzeugen von Metadaten mit Kantenpositionen durch ein FPGA als Beispiel einer ersten Verarbeitungseinheit 30 und anschließendem Lesen eines optischen Codes allein auf Basis der Metadaten durch einen Mikroprozessor als Beispiel einer zweiten Verarbeitungseinheit 32. Auf der rechten Seite sind zu den einzelnen Schritten des Ablaufdiagramms die jeweils zuständigen Einheiten 24, 30, 32 eingezeichnet. Das ist eine bevorzugte Zuordnung, zumindest einige der Schritte können wahlweise auf der ersten Verarbeitungseinheit 30, der zweiten Verarbeitungseinheit 32 oder verteilt auf beiden Verarbeitungseinheiten 30, 32 ablaufen. Weiterhin sind einige der dargestellten Schritte optional, die Erfindung ist keineswegs auf die vollständige Abarbeitung aller in Figur 5 dargestellten Schritte beschränkt, auch wenn das eine bevorzugte Ausführungsform ist.

Die Grundidee besteht darin, mit der ersten Verarbeitungseinheit 30 Kantenpositionen in den Bilddaten aufzufinden und diese als Metadaten an die zweite Verarbeitungseinheit 32 weiterzugeben, die allein auf Basis der Metadaten Codes liest, ohne dafür auf die Bilddaten zuzugreifen. Dies ist besonders geeignet für Barcodes mit einer ausreichenden Modulgröße von beispielsweise mindestens zwei ppm (pixel per module). Kacheln 38, wie zu Figur 3 eingeführt, sind nicht zwangsläufig erforderlich, die Figur 5 enthält keinen Verweis auf Kacheln 38. Allerdings werden die einzelnen Schritte häufig anhand von Kacheln 38 erläutert, weil dies eine bevorzugte Ausführungsform ist. Ohne Kacheln 38 sind die Schritte wegen der größeren Datenmengen oft aufwändiger, umgekehrt müssen dann keine Übergänge zwischen Kacheln 38 beachtet werden.

In einem Schritt S1 nimmt der Bildsensor 24 ein Bild mit einer gewissen Grauwert- oder Farbtiefe von beispielsweise acht, zehn oder zwölf Bit auf. In einem zweiten Schritt S2 werden die Bilddaten von der ersten Verarbeitungseinheit 30 ausgelesen (Streaming). Die weiteren Schritte zur Auswertung bereits eingelesener Bilddaten und zur Erzeugung von Metadaten können bereits "on-the-fly" ausgeführt werden, noch während weitere Bilddaten eingelesen werden. Für die weitere Verarbeitung werden vorzugsweise Kacheln 38 gebildet, wie zu Figur 3 erläutert und beispielhaft für eine Kachel in Figur 4a gezeigt, und Metadaten kachelweise bestimmt. Dabei muss möglicherweise gewartet werden, bis genügend Bilddaten zwischengepuffert sind, beispielsweise hinreichend viele Bildzeilen entsprechend der Höhe einer Kachel 38 eingelesen sind.

In einem optionalen Schritt S3 werden die Bilddaten binarisiert, also in ein zweiwertiges Schwarz-Weiß-Bild gewandelt. Das Ergebnis der Binarisierung ist beispielhaft für die Kachel der Figur 4a in Figur 4b gezeigt. In dem binarisierten Bild sind Kantenübergänge scharf definiert, prinzipiell kann eine Kante aber auch in einem Grauwert- oder Farbbild lokalisiert werden. Während der Binarisierung, alternativ davor oder danach, kann optional eine Auflösungserhöhung beispielsweise von 24x24 Pixel auf 48x48 Pixel erfolgen (Interpolation, beispielsweise bilinear oder bikubisch, Upsampling). Die Auflösungserhöhung erleichtert den Umgang mit kleinen Modulgrößen beziehungsweise erweitert den Anwendungsbereich des erfindungsgemäßen Verfahrens auf kleinere Modulgrößen.

In einem Schritt S4 werden Kantenpositionen in X-Richtung und Y-Richtung bestimmt. Dazu wird längs der Zeilen beziehungsweise Spalten der Bilddaten jeweils die Position notiert, an der ein Übergang von schwarz nach weiß oder umgekehrt stattfindet. Auf eine Kachel bezogen ergibt dies für eine einzelne Zeile oder Spalte eine Reihe von Kantenpositionen wie beispielsweise (13, 27, 32, 41, 46). Geht man von Kacheln der Größe 48x48 aus, so ergeben sich zweimal 48 solche Reihen von Kantenpositionen, einmal für die Zeilen und einmal für die Spalten. Das ist eine doppelte Liste mit 2x48xN Kantenpositionen, wobei N mit den Zeilen und Spalten variieren kann. Es kann noch ein Randproblem auftreten, wenn eine Kante ausgerechnet zwischen zwei Kacheln liegt. Dafür kann eine zusätzliche Zeile und Spalte vorgesehen oder alternativ eine Kachelgröße von 49x49 mit einem Pixel Überlapp gewählt werden.

In den Kantenpositionen fehlt noch die für das spätere Decodieren relevante Information, ob es ein Übergang von schwarz nach weiß oder ein Übergang von weiß nach schwarz ist. Diese Information kann an jede Kantenposition angehängt werden oder eine zweite Liste in der Größe der Liste der Kantenpositionen mit der Zusatzinformation geführt werden. Alternativ wird diese Information je Zeile und Spalte nur für einen einzigen Übergang mitgeführt, denn die weiteren Kanten sind damit eindeutig definiert. Dies sind nur Beispiele, viele andere Repräsentationen wie ein Vorzeichen oder ein höherwertiges Bit der Kantenpositionen sind ebenfalls möglich.

Die Kantenpositionen können in dieser Form als Metadaten an die zweite Verarbeitungseinheit 32 übergeben werden, um allein aus den Metadaten ohne Rückgriff auf die Bilddaten den Code zu lesen. Vorzugsweise werden aber von der ersten Verarbeitungseinheit 30 noch optionale zusätzliche Vorbereitungen geleistet, wie nun als Schritt S5 und S6 beschrieben, wobei je nach Ausführungsform nur einer dieser Schritte, beide Schritte oder keiner der Schritte durchgeführt wird.

In einem Schritt S5 wird eine Vorzugsrichtung des Codes in dem Bild bestimmt. Dieser Schritt ist optional beziehungsweise kann alternativ erst später von der zweiten Verarbeitungseinheit 32 durchgeführt werden. Der Code ist mit beliebiger Orientierung aufgenommen und demnach im Allgemeinen nicht in X-Richtung entsprechend den Zeilen und nicht in Y-Richtung entsprechend den Spalten ausgerichtet. Entweder die X-Richtung oder die Y-Richtung passt aber besser zu der tatsächlichen Ausrichtung des Codes, das ist die Vorzugsrichtung. Dies kann über die Anzahl der Kanten entschieden werden, die in X-Richtung im Vergleich zur Y-Richtung liegen. Eine Linie quer zu einem Barcode quert alle dessen Balken bei maximaler Anzahl Kanten, eine Linie längs zu einem Barcode trifft bestenfalls auf die Kanten am oberen und unteren Ende desselben Balkens. Daraus wird klar, dass die höhere Anzahl Kanten der Vorzugsrichtung entspricht. Um die Anzahl zu bestimmen, wird beispielsweise für die X-Richtung und die Y-Richtung jeweils ein Zähler mit jeder Kantenposition in der zugehörigen Richtung erhöht. Die doppelte Liste mit 2x48xN Einträgen kann nun zur Weitergabe in Form von Metadaten noch ausgedünnt werden zu einer einfachen Liste mit 1x48xN Einträgen nur für die Vorzugsrichtung, die Kantenpositionen der anderen Richtung können verworfen werden.

In einem optionalen Schritt S6 wird ein Linienversatz durch Vergleich benachbarter Linien bestimmt. Der Begriff Linie steht hier für Zeile oder Spalte, je nachdem, ob die X-Richtung oder die Y-Richtung betrachtet wird. Bevorzugt ist wegen Schritt S5 nur noch eine der beiden Richtungen als die Vorzugsrichtung übrig, davon wird nun ausgegangen. Das Bestimmen des Linienversatzes ist ein Vorbereitungsschritt zu einem gegenseitigen Ausrichten und Zusammenfassen der Kantenpositionen über mehrere Linien hinweg zu einer repräsentativen Linie, wie später zu Schritt S8 und S10 beschrieben. Vorzugsweise bereitet die erste Verarbeitungseinheit 30 somit das Zusammenfassen im Schritt S6 vor und die zweite Verarbeitungseinheit 32 führt es in den Schritten S8 und S10 durch. Alternativ können alle Schritte schon in der ersten Verarbeitungseinheit 30 oder erst in der zweiten Verarbeitungseinheit 32 durchgeführt werden.

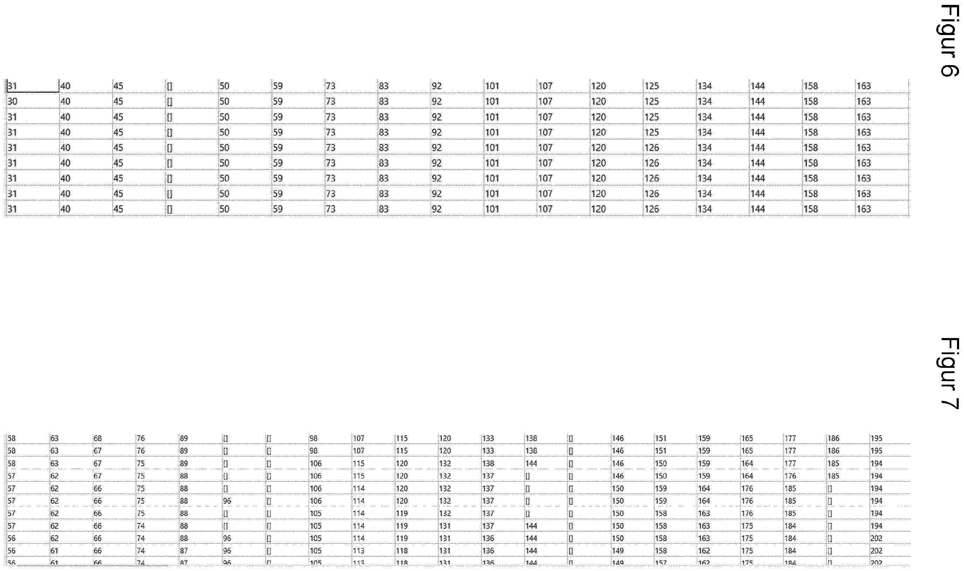

Da ein Barcode eine gewisse Ausdehnung besitzt, stehen Kantenpositionen nicht nur für eine Linie, sondern redundant für eine Vielzahl benachbarter Linien zur Verfügung. Für den Idealfall, dass der Code in X-Richtung oder Y-Richtung ausgerichtet ist, lässt sich diese Redundanz relativ leicht ausnutzen und beseitigen. Figur 6 zeigt ein Beispiel von über mehrere Kacheln zusammengefügten Kantenpositionen für mehrere benachbarte Linien in diesem Idealfall. Die Kantenpositionen unterscheiden sich so gut wie nicht, so dass beispielsweise irgendeine Linie als repräsentativ herausgegriffen, alternativ eine Mittelwertberechnung oder Mehrheitsentscheidung herangezogen werden könnte.

Bei allgemeiner und daher beliebiger und zumindest anfangs unbekannter Orientierung des Codes werden die Dinge komplizierter, wie das in Figur 7 gezeigte Beispiel illustriert. Die schräge Orientierung ist nicht die einzige denkbare Ursache für Unstimmigkeiten, es kann auch durch Verunreinigungen und sonstige Störungen zu Fehldetektionen von Kanten in einzelnen Linien kommen.

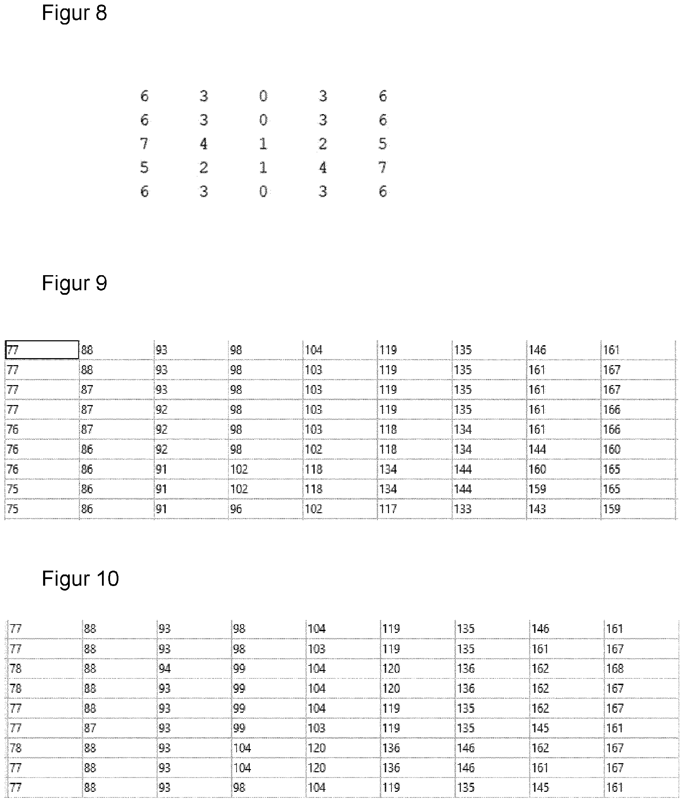

Ein Verfahren, mit dem recheneffizient ausgleichende Verschiebungen zwischen den Linien aufgefunden werden, vergleicht eine jeweilige Linie mit ihren beiden Nachbarn. Für eine Kachel werden die erste und zweite Linie geladen und nacheinander um [-k, ..., 0, ... k] Pixel gegeneinander verschoben, wobei k eine kleine natürliche Zahl ist, hier wird beispielhaft k=2 gewählt. Für jede Verschiebung wird pixelweise die Differenz der beiden Linien gebildet und über den Betrag dieser Differenzen aufsummiert, um einen Fehlerwert zu erhalten: *error = sum(abs(line1 - line2))*. Es wird dann die dritte Linie geladen und ein entsprechender Fehlerwert für den Vergleich zwischen der ersten Linie und der dritten Linie sowie zwischen der zweiten Linie und der dritten Linie berechnet. Dies wird für die weiteren Dreigruppen von Linien, also zunächst die zweite bis vierte Linie bis hin zur 46.-48. Linie einer Kachel wiederholt. Es ergeben sich insgesamt 46x2x5 Fehlerwerte. Figur 8 zeigt einen beispielhaften 5x1x5-Ausschnitt davon.

Die Fehlerwerte werden nun zunächst zeilenweise ausgewertet. Für die Vergleiche von direkt benachbarten Linien beträgt der maximale Verschiebungsfehler $\pm 1$ Pixel, da in Vorzugsrichtung die Schräglage des Codes durch 45° nach oben begrenzt ist. Es stehen fünf Fehlerwerte zur Verfügung, entsprechend den fünf Verschiebungen [-k, ...0, ...k] bei k=2, die mit value (1)....value(5) bezeichnet sind.

Als Regeln für den Verschiebungsfehler shift werden festgelegt:

Ist value(3) =0, so ist shift =0.
Ist value(4)=0, so ist shift=-1.
Ist value(2)=0, so ist shift =+1.

Andernfalls:

$$\text{shift} = -(\frac{-2}{\text{value}(1)} + \frac{-1}{\text{value}(2)} + \frac{+1}{\text{value}(4)} + \frac{+2}{\text{value}(5)}).$$

Die ersten drei Regeln berücksichtigen den maximal möglichen Verschiebungsfehler. Die vierte Regel approximiert ansonsten den Verschiebungsfehler auf einfach zu berechnende Weise entsprechend der Abweichung von einer maximalen Verschiebung mit einem jeweiligen gewichteten Beitrag. Zur Vermeidung ressourcenintensiver Divisionen in einem FPGA können stattdessen Nachschlagtabellen (LUT, Lookup Table) implementiert werden, die ein Inverses bilden (n>1/n) und die nicht viele Werte berücksichtigen müssen, da die Fehlerwerte nicht groß werden. Stehen mehr Rechenressourcen zur Verfügung, beispielsweise bei Implementierung auf der zweiten Verarbeitungseinheit 32, so kann statt der Regeln eine aufwändigere Berechnung erfolgen, beispielsweise eine Parabelapproximation mit Stützstellen um value(3).

Werden nicht direkt benachbarte Linien i, (i-1) verglichen, sondern übernächste Nachbarn i, (i-2), so ist das Vorgehen ähnlich, nur dass sich einige Vorfaktoren ändern. Dabei ist zu bedenken, dass nun der maximale Verschiebungsfehler zwei Pixel betragen kann.

Die Regeln lauten hier:

Ist value(3) =0, so ist shift =0.
Ist value(4)=0, so ist shift=-1/2.
Ist value(2)=0, so ist shift =+1/2.
Ist value(1)=0, so ist shift =+1.
Ist value(5)=0, so ist shift =-1.

Andernfalls:

$$\text{shift} = -0.5(\frac{-2}{\text{value}(1)} + \frac{-1}{\text{value}(2)} + \frac{+1}{\text{value}(4)} + \frac{+2}{\text{value}(5)}).$$

Mit shift ist ein jeweiliger zeilenweiser Verschiebungsfehler bestimmt, einmal für den Vergleich der Linien i, (i-1) und einmal der Linien i, (i-2). Dies kann nun über die i=1...46 Zeilen von Fehlerwerten hinweg akkumuliert werden: shiftGesamt(i) = shiftGesamt(i - 1) + shift. Als Qualitätsmerkmal kann zudem die Summe der Verschiebungsfehler bestimmt werden, und bei Überschreitung eines Schwellenwertes kann beispielsweise davon ausgegangen werden, dass keine gute Verschiebung gefunden werden konnte. Der Verschiebungsfehler shiftGesamt und das Qualitätsmerkmal können für den Fall der Verschiebung der Linie i gegenüber der Linie (i-1) und gegenüber der Linie (i-2) bestimmt und als Metadaten weitergegeben werden.

In einem Schritt S7 findet nun eine Segmentierung statt, in der interessierende Bereiche mit Codes gefunden werden. Dies wird beispielsweise in der einleitend genannten EP 2 555 160 B1 beschrieben und kann alternativ jedes andere an sich bekannte Segmentierungsverfahren nutzen, einschließlich Verfahren des maschinellen Lernens, insbesondere neuronaler Netze. Bei der Segmentierung wird vorzugsweise auch der Codetyp bestimmt. Das erfindungsgemäße Decodieren funktioniert bevorzugt mit Barcodes, und noch bevorzugter solchen, die mit einer Mindestauflösung aufgenommen sind, also eine gewisse Modulgröße von beispielsweise mindestens zwei Pixeln pro Modul aufweisen. In einer bevorzugten Ausführungsform wird ein erfindungsgemäßes Decodieren allein anhand der Metadaten nur versucht, wenn entsprechende Bedingungen erfüllt sind. Andernfalls kann direkt ein herkömmlicher Decoder verwendet werden, der allerdings wieder auf die Bilddaten zugreifen muss. Der Einsatz eines herkömmlichen Decoders ist auch möglich, wenn der Leseversuch allein mit den Metadaten scheitert (Retry).

Die Segmentierung erfolgt erst recht spät im Ablauf, was bedeutet, dass die bisher beschriebenen Schritte für alle Kacheln mit beliebiger Bildinformation durchgeführt werden, ungeachtet dessen, ob überhaupt relevante Codefragmente in der Kachel enthalten sind. Dafür können die bisherigen Ergebnisse genutzt werden, um zu entscheiden, welche Kacheln zu einem interessierenden Bereich gehören. Alternativ kann die Segmentierung bereits in einem früheren Schritt erfolgen.

Nach der Segmentierung übernimmt ab einem Schritt S8 die zweite Verarbeitungseinheit 32. Die erste Verarbeitungseinheit 30 hat Metadaten kachelweise bestimmt, nämlich Kantenpositionen, optional Vorzugsrichtung und Shifts samt Qualitätsmerkmal, und einiges sollte nun über Kacheln hinweg konsolidiert werden.

Es kann passieren, dass sich nicht alle Kacheln zu einem interessierenden Bereich über die Vorzugsrichtung einig sind. Dann kann beispielsweise über eine Mehrheitsentscheidung eine globale Vorzugsrichtung festgelegt werden. Die Mehrheit sollte deutlich ausfallen, denn wenn nicht einmal die Vorzugsrichtung klar bestimmbar ist, dürfte ein einfaches Codelesen anhand von Metadaten ohnehin scheitern. Deshalb kann die Minderheit der Kacheln mit abweichender Vorzugsrichtung verworfen werden.

Die Kantenpositionen werden über Kacheln hinweg aneinandergereiht, indem je nach Position der Kachel innerhalb des interessierenden Bereichs ein entsprechendes Vielfaches der Kachelausdehnung zu einer Kantenposition addiert wird. Figur 9 zeigt beispielhaft Kantenpositionen für mehrere Linien in Vorzugsrichtung nach der Aneinanderreihung, jedoch noch ohne Korrektur von Verschiebungen.

In dem optionalen Schritt S8 werden dann die Linien zueinander ausgerichtet, unter Rückgriff auf die in den Metadaten übergebenen Shifts und Qualitätsmerkmale aus Schritt S6 oder indem alternativ dieser Schritt S6 erst jetzt von der zweiten Verarbeitungseinheit 32 durchgeführt wird. Um die je Kachel berechneten Shifts über die Kacheln hinweg zu konsolidieren, kann beispielsweise ein Mittelwert berechnet werden. Zuvor werden vorzugsweise noch Ausreißer eliminiert, wobei das jeweilige in den Metadaten mit enthaltene Qualitätsmerkmal einen Hinweis geben kann. Gegebenenfalls kann das Verfahren abgebrochen und ein herkömmlicher Decoder angestoßen werden, wenn zu viele Kacheln mit schlechten Qualitätsmerkmalen betroffen sind, d.h. der Code nicht mehr in der Vorzugsrichtung mit Kacheln überdeckt werden kann, deren Qualitätsmerkmal ausreichend hoch ist.

Der als meanShift bezeichnete konsolidierte Shift wird nun jeweils von der j-ten Linie abgezogen. Da es ein Shift zwischen benachbarten Linien ist, wird mit dem Linienindex j skaliert: *pos = pos - meanShift ∗ j.* Figur 10 zeigt ein Ergebnis für das Beispiel der Figur 9.

In einem optionalen Schritt S9 wird ein Positionshistogramm gebildet und ausgewertet. Wie in Figur 10 zu erkennen, ist allein durch die shifts der angestrebte Idealfall mit gleichen Zeilen in der Tabelle tatsächlich noch nicht erreicht. Das zu den Schritten S6 und S8 beschriebene Verfahren ist für einen FPGA optimiert, und daher ist der shift über unvermeidliche Rechenfehler eines jeden real angewandten Algorithmus' hinaus nicht exakt bestimmt.

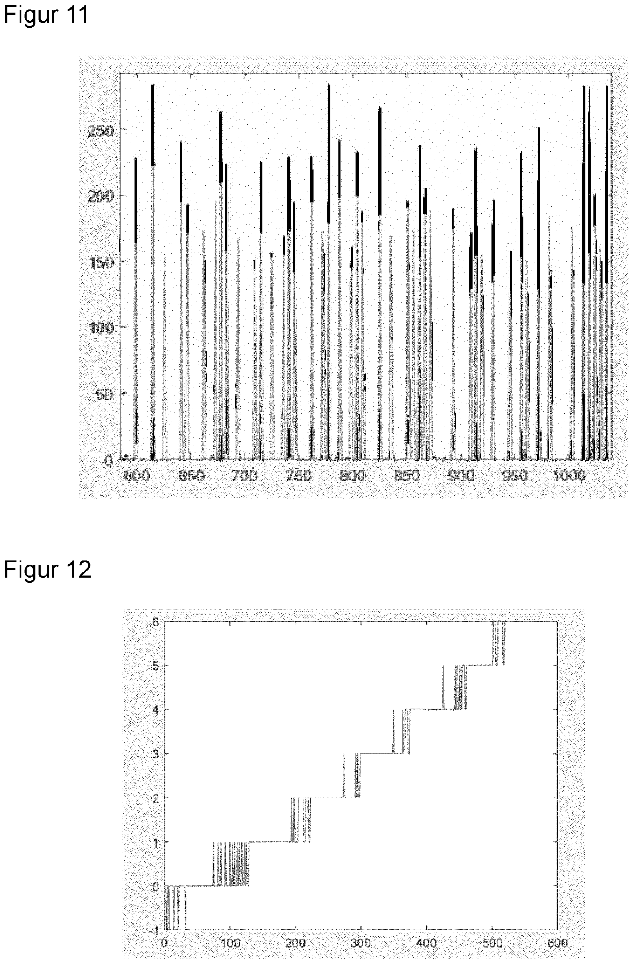

Figur 11 zeigt ein beispielhaftes Positionshistogramm, das allerdings für eine bessere Statistik auf anderen Zahlen beruht als die Tabelle gemäß Figur 10. Das Positionshistogramm sammelt in seinen auf der X-Achse aufgetragenen Bins entsprechend möglichen Kantenpositionen die auf der Y-Achse aufgetragene Anzahl, wie oft diese Kantenposition bestimmt wurde.

Während des Aufbaus des Histogramms, Zeile für Zeile durch die Kantenpositionen ähnlich der Tabelle in Figur 10, kann festgestellt werden, ob in einem Nachbarbin schon ein Count vorhanden ist, und dann wird ein Versatz gegen das Nachbarbin notiert. Nach jeder Zeile entsteht so eine Liste von Offsets wie beispielsweise (0,0,1,0,-1,0,1,...). Daraus wiederum kann ein Mittelwert offsetMean bestimmt werden, der für jede neue Zeile berücksichtigt und abgezogen beziehungsweise addiert wird. Weiter wird der globale offset der vorherigen Zeile berücksichtigt, so dass sich der Offset für jede Zeile wie folgt ändert: offset = floor(offset) + round(offsetMean). Dieser Offset wird zeilenweise korrigiert und vorzugsweise mit dem oben beschriebenen Shift kombiniert. Der Offset kompensiert Fehler, die daher rühren, dass der Shift nicht exakt bestimmt werden konnte.

Figur 11 zeigt genaugenommen nicht nur ein Positionshistogramm, sondern die Überlagerung des soeben beschriebenen Vorgehens (dunkel) und einen Vergleich (hell), bei dem der exakte Shift manuell berechnet wurde. Der zusätzliche Offset, der im Schritt S10 bestimmt wird, ist überdies in Figur 12 illustriert, in der auf der X-Achse die Zeilennummer und auf der Y-Achse der Offset aufgetragen ist.

In einem Schritt S10 werden die redundant über mehrere Linien bestimmten Kantenpositionen nun zusammengefasst. Um wieder auf das Beispiel der Figur 10 zurückzukommen, soll die redundante zweidimensionale Tabelle auf eine eindimensionale Zeile komprimiert werden. Idealerweise sind die Zeilen untereinander identisch, die optionalen Schritte S8 und/oder S10 mit Korrektur der gegenseitigen Verschiebung durch shifts und/oder offsets trägt dazu bei, sich diesem Idealfall besser anzunähern. Somit kann nun ähnlich wie in dem Idealfall gemäß Figur 4 eine Zeile herausgegriffen, ein Mittelwert gebildet, eine Mehrheitsentscheidung getroffen oder eine ähnliche Berechnung durchgeführt werden, um repräsentative Kantenpositionen zu finden

In einem abschließenden Schritt S11 wird die gewonnene eindimensionale Liste von Kantenpositionen verwendet, um den Code zu lesen. Die Differenzen benachbarter Kantenpositionen entsprechend unmittelbar den Breiten der Striche und Lücken des Barcodes, so dass ein Decodieren nun ohne Weiteres möglich ist.

**Patentansprüche**

1. Verfahren zum Lesen eines optischen Codes (20), bei dem mit einem Bildsensor (24) Bilddaten mit dem Code (20) aufgenommen werden, eine erste Verarbeitungseinheit (30) die Bilddaten aus dem Bildsensor (24) ausliest und Metadaten zu den Bilddaten und/oder dem Code (20) im Zuge einer Vorverarbeitung der Bilddaten erzeugt und eine zweite Verarbeitungseinheit (32) nach der Vorverarbeitung durch die erste Verarbeitungseinheit (30) den Code (20) liest, wobei Metadaten Informationen über die Bilddaten sind,

   **dadurch gekennzeichnet,**

   **dass** mit der ersten Verarbeitungseinheit (30) Kantenpositionen von Schwarz-Weiß-Übergängen in den Bilddaten aufgefunden und als Metadaten an die zweite Verarbeitungseinheit (32) weitergegeben werden, die den Code (20) allein auf Basis der Metadaten liest, ohne dafür auf die Bilddaten zuzugreifen, dass die Kantenpositionen vielfach für mehrere oder alle Zeilen und/oder Spalten der Bilddaten bestimmt werden, dass aus den vielfachen Kantenpositionen zu mehreren Zeilen und/oder Spalten jeweils repräsentative Kantenpositionen für die horizontale und/oder vertikale Richtung bestimmt werden und dass zum Auffinden repräsentativer Kantenpositionen die Zeilen und/oder Spalten gegeneinander verschoben werden, um die jeweiligen Kantenpositionen zueinander auszurichten.

2. Verfahren nach Anspruch 1,
   wobei die Metadaten zumindest anfänglich Kantenpositionen für eine horizontale und eine vertikale Richtung aufweisen.

3. Verfahren nach Anspruch 1 oder 2,
   wobei Kantenpositionen in horizontaler Richtung und vertikaler Richtung gezählt werden und eine Vorzugsrichtung des Codes (20) anhand der Kantenpositionen mit der höheren Anzahl bestimmt wird.

4. Verfahren nach einem der vorhergehenden Ansprüche,
   wobei die jeweils erforderliche Verschiebung durch Vergleich einer jeweiligen Zeile mit zwei benachbarten Zeilen und/oder einer jeweiligen Spalte mit zwei benachbarten Spalten bestimmt wird.

5. Verfahren nach einem der vorhergehenden Ansprüche,
   wobei die repräsentativen Kantenpositionen durch Bilden und Auswerten eines Positionshistogramms bestimmt oder korrigiert werden.

6. Verfahren nach einem der vorhergehenden Ansprüche,
   wobei die erste Verarbeitungseinheit (30) die Bilddaten in einem Bilddatenstrom einliest und insbesondere eingelesene Bilddaten schon verarbeitet werden, noch während die erste Verarbeitungseinheit (30) weitere Bilddaten einliest.

7. Verfahren nach einem der vorhergehenden Ansprüche,
   wobei die erste Verarbeitungseinheit (30) die Bilddaten in Kacheln (38) unterteilt, also Teilbereiche einer vorgegebenen Größe, wobei die Verarbeitung der Bilddaten kachelweise erfolgt und wobei in den Metadaten Kantenpositionen von Schwarz-Weiß-Übergängen in den Bilddaten über Kacheln (38) hinweg zusammengefügt werden.

8. Verfahren nach Anspruch 7,
   wobei die erste Verarbeitungseinheit (30) die Kacheln (38) klassifiziert, ob darin ein Teil eines Codes (20) aufgenommen ist, und Kacheln (38) einem interessierenden Bereich (40) mit einem Code (20) zuordnet.

9. Verfahren nach einem der vorhergehenden Ansprüche,
   wobei die erste Verarbeitungseinheit (30) ein FPGA (Field Programmable Gate Array) und/oder die zweite Verarbeitungseinheit (32) einen Mikroprozessor aufweist.

10. Verfahren nach einem der vorhergehenden Ansprüche,

wobei die Codes (20) auf Objekten (14) angebracht sind, die auf einer Fördereinrichtung (12) durch einen Erfassungsbereich (18) des Bildsensors (24) gefördert werden.

11. Optoelektronische Codelesevorrichtung (10) mit einem Bildsensor (24) zur Erzeugung von Bilddaten und mit einer Steuer- und Auswertungseinheit (26), die eine erste Verarbeitungseinheit (30) und eine zweite Verarbeitungseinheit (32) aufweist und in der ein Verfahren zum Lesen eines optischen Codes (20) nach einem der vorhergehenden Ansprüche implementiert ist.

**Claims**

1. A method for reading an optical code (20), wherein image data with the code (20) are recorded using an image sensor (24), a first processing unit (30) reads the image data from the image sensor (24) and generates metadata for the image data and/or the code (20) in the course of preprocessing the image data, and a second processing unit (32) reads the code (20) after the preprocessing by the first processing unit (30), wherein metadata is information about the image data,
**characterized in that** the first processing unit (30) is used to find edge positions of black/white transitions in the image data and pass them on to the second processing unit (32) as metadata, which reads the code (20) solely on the basis of the metadata without accessing the image data for this purpose, **in that** the edge positions are determined multiple times for several or all rows and/or columns of the image data, **in that** respective representative edge positions for the horizontal and/or vertical direction are determined from the multiple edge positions for several rows and/or columns, and **in that**, in order to find representative edge positions, the rows and/or columns are shifted relative to one another in order to align the respective edge positions with one another.

2. The method according to claim 1,
wherein the metadata at least initially comprises edge positions for a horizontal and a vertical direction.

3. The method according to claim 1 or 2,
wherein edge positions are counted in the horizontal direction and in the vertical direction and a preferred direction of the code (20) is determined on the basis of the edge positions with the higher number.

4. The method according to any of the preceding claims,
wherein the respectively required displacement is determined by comparing a respective row with two adjacent rows and/or a respective column with two adjacent columns.

5. The method according to any of the preceding claims,
wherein the representative edge positions are determined or corrected by forming and evaluating a position histogram.

6. The method according to any of the preceding claims,
wherein the first processing unit (30) reads in the image data in an image data stream and, in particular, read-in image data are already processed while the first processing unit (30) is still reading in further image data.

7. The method according to any of the preceding claims,
wherein the first processing unit (30) divides the image data into tiles (38), i.e. partial areas of a predetermined size, wherein the image data is processed tile by tile and wherein edge positions of black-white transitions in the image data are merged across tiles (38) in the metadata.

8. The method according to claim 7,
wherein the first processing unit (30) classifies the tiles (38) as to whether a part of a code (20) is included therein and assigns tiles (38) to a region of interest (40) having a code (20).

9. The method according to any of the preceding claims,
wherein the first processing unit (30) comprises an FPGA (Field Programmable Gate Array) and/or the second processing unit (32) comprises a microprocessor.

10. The method according to any of the preceding claims,
wherein the codes (20) are attached to objects (14) which are conveyed on a conveyor (12) through a detection area (18) of the image sensor (24).

11. An optoelectronic code reading device (10) comprising an image sensor (24) for generating image data and a control and evaluation unit (26) having a first processing unit (30) and a second processing unit (32), wherein a method for reading an optical code (20) according to any of the preceding claims is implemented in the control and evaluation unit (26).


**Revendications**

1. Procédé de lecture d'un code optique (20), dans lequel des données d'image avec le code (20) sont enregistrées au moyen d'un capteur d'image (24), une première unité de traitement (30) lit les données d'image à partir du capteur d'image (24) et génère des métadonnées relatives aux données d'image et/ou au code (20) au cours d'un prétraitement des données d'image, et une deuxième unité de traitement (32) lit le code (20) après le prétraitement par la première unité de traitement (30),

   les métadonnées étant des informations sur les données d'image,
   **caractérisé en ce que**
   la première unité de traitement (30) permet de trouver des positions de bord des transitions noir et blanc dans les données d'image et de les transmettre en tant que métadonnées à la deuxième unité de traitement (32) qui lit le code (20) en se basant seulement sur les métadonnées, sans accéder aux données d'image, **en ce que** les positions de bord sont déterminées plusieurs fois pour plusieurs ou toutes les lignes et/ou colonnes des données d'image, **en ce que**, à partir des positions de bord multiples pour plusieurs lignes et/ou colonnes, des positions de bord respectives représentatives sont déterminées pour la direction horizontale et/ou verticale, et **en ce que**, pour trouver des positions de bord représentatives, les lignes et/ou les colonnes sont déplacées les unes par rapport aux autres, afin d'aligner les positions de bord respectives les unes par rapport aux autres.

2. Procédé selon la revendication 1,
   dans lequel les métadonnées comprennent au moins initialement des positions de bord pour une direction horizontale et une direction verticale.

3. Procédé selon la revendication 1 ou 2,
   dans lequel des positions de bord dans la direction horizontale et dans la direction verticale sont comptées, et une direction préférentielle du code (20) est déterminée à l'aide des positions de bord présentant le nombre le plus élevé.

4. Procédé selon l'une des revendications précédentes,
   dans lequel le déplacement respectivement nécessaire est déterminé par comparaison d'une ligne respective avec deux lignes voisines et/ou d'une colonne respective avec deux colonnes voisines.

5. Procédé selon l'une des revendications précédentes,
   dans lequel les positions de représentatives sont déterminées ou corrigées par formation et évaluation d'un histogramme de positions.

6. Procédé selon l'une des revendications précédentes,
   dans lequel la première unité de traitement (30) lit les données d'image dans un flux de données d'image et, en particulier, les données d'image lues sont déjà traitées alors que la première unité de traitement (30) est encore en train de lire d'autres données d'image.

7. Procédé selon l'une des revendications précédentes,
   dans lequel la première unité de traitement (30) subdivise les données d'image en carreaux (38), c'est-à-dire en zones partielles d'une taille prédéfinie, le traitement des données d'image s'effectue carreau par carreau et, dans les métadonnées, les positions de bord des transitions noir et blanc dans les données d'image sont assemblées à travers les carreaux (38).

8. Procédé selon la revendication 7,
   dans lequel la première unité de traitement (30) classe les carreaux (38) pour savoir s'ils incluent une partie d'un code (20), et associe les carreaux (38) à une zone d'intérêt (40) présentant un code (20).

9. Procédé selon l'une des revendications précédentes,
   dans lequel la première unité de traitement (30) comprend un FPGA (Field Programmable Gate Array), et/ou la deuxième unité de traitement (32) comprend un microprocesseur.

10. Procédé selon l'une des revendications précédentes,
    dans lequel les codes (20) sont appliqués sur des objets (14) qui sont transportés sur un convoyeur (12) à travers une zone de détection (18) du capteur d'image (24).

11. Dispositif optoélectronique de lecture de code (10) comprenant un capteur d'image (24) destiné à générer des données d'image et une unité de commande et d'évaluation (26) qui comprend une première unité de traitement (30) et une deuxième unité de traitement (32), mettant en oeuvre un procédé de lecture d'un code optique (20) selon l'une des revendications précédentes.

# Figur 1

# Figur 2

## Figur 3

## Figur 4a

## Figur 4b

# Figur 5

24

S1 — | Aufnahme von Bilddaten |

Bildsensor

S2 — | Streaming der Bilddaten durch FPGA |

FPGA

30

S3 — | Binarisierung der Bilddaten |

S4 — | Bestimmung der Kantenpositionen in X- und Y-Richtung |

S5 — | Bestimmung Vorzugsrichtung durch Zählen von Kanten |

S6 — | Bestimme Linienversatz durch Vergleich benachbarter Linien |

S7 — | Segmentierung: ROIs mit Codes finden |

32

S8 — | Ausrichten der Kanten anhand Linienversatz |

CPU

S9 — | Positionshistogramm bilden und auswerten |

S10 — | Zusammenfassen aus Vielzahl Linien in repräsentative Kantenpositionen in nur einer Linie |

S11 — | Decodieren |

# Figur 6

# Figur 7

## Figur 8

| | | | | |
|---|---|---|---|---|
| 6 | 3 | 0 | 3 | 6 |
| 6 | 3 | 0 | 3 | 6 |
| 7 | 4 | 1 | 2 | 5 |
| 5 | 2 | 1 | 4 | 7 |
| 6 | 3 | 0 | 3 | 6 |

## Figur 9

| | | | | | | | | |
|---|---|---|---|---|---|---|---|---|
| 77 | 88 | 93 | 98 | 104 | 119 | 135 | 146 | 161 |
| 77 | 88 | 93 | 98 | 103 | 119 | 135 | 161 | 167 |
| 77 | 87 | 93 | 98 | 103 | 119 | 135 | 161 | 167 |
| 77 | 87 | 92 | 98 | 103 | 119 | 135 | 161 | 166 |
| 76 | 87 | 92 | 98 | 103 | 118 | 134 | 161 | 166 |
| 76 | 86 | 92 | 98 | 102 | 118 | 134 | 144 | 160 |
| 76 | 86 | 91 | 102 | 118 | 134 | 144 | 160 | 165 |
| 75 | 86 | 91 | 102 | 118 | 134 | 144 | 159 | 165 |
| 75 | 86 | 91 | 96 | 102 | 117 | 133 | 143 | 159 |

## Figur 10

| | | | | | | | | |
|---|---|---|---|---|---|---|---|---|
| 77 | 88 | 93 | 98 | 104 | 119 | 135 | 146 | 161 |
| 77 | 88 | 93 | 98 | 103 | 119 | 135 | 161 | 167 |
| 78 | 88 | 94 | 99 | 104 | 120 | 136 | 162 | 168 |
| 78 | 88 | 93 | 99 | 104 | 120 | 136 | 162 | 167 |
| 77 | 88 | 93 | 99 | 104 | 119 | 135 | 162 | 167 |
| 77 | 87 | 93 | 99 | 103 | 119 | 135 | 145 | 161 |
| 78 | 88 | 93 | 104 | 120 | 136 | 146 | 162 | 167 |
| 77 | 88 | 93 | 104 | 120 | 136 | 146 | 161 | 167 |
| 77 | 88 | 93 | 98 | 104 | 119 | 135 | 145 | 161 |

Figur 11

Figur 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2003599 A1
- EP 2555160 B1
- EP 3916633 A1
- US 20120138686 A1
- US 5789728 A